# EUROPEAN PATENT APPLICATION

(11) **EP 4 746 196 A1**
(43) Date of publication of application: **20.05.2026**
(21) Application number: 24905835.5
(22) Date of filing: 28.10.2024
(51) Int. Cl.: H01Q 1/44, H01Q 1/36, H01Q 1/38, H01H 13/14

(54) **BUTTON ASSEMBLY, ELECTRONIC DEVICE, AND MANUFACTURING METHOD FOR BUTTON SUPPORT**

(30) Priority: 17.12.2023 CN 202311744672
(71) Applicant: Huawei Technologies Co., Ltd., Shenzhen, Guangdong 518129 (CN)
(72) Inventor: LIU, Yao, Shenzhen, Guangdong 518129 (CN); WU, Peng, Shenzhen, Guangdong 518129 (CN); ZHANG, Guangyong, Shenzhen, Guangdong 518129 (CN); ZHOU, Yuxuan, Shenzhen, Guangdong 518129 (CN); YANG, Zixuan, Shenzhen, Guangdong 518129 (CN); ZHANG, Jinwang, Shenzhen, Guangdong 518129 (CN)
(74) Representative: Goddar, Heinz J.
(86) International application number: PCT/CN2024/127569
(87) International publication number: WO 2025/130347

(57) **Abstract**

Disclosed are a button assembly, an electronic device (100), and a method for manufacturing a button bracket. The button assembly includes two buttons, two antennas, and two metal brackets. A first button (111) and a second button (112) are arranged in a first direction. There is a slot (123) between a first antenna (121) and a second antenna (122) in the first direction. The slot (123) is located between the first button (111) and the second button (112). A first metal bracket (151) is disposed on a side that is of the first antenna (121) and that is away from the first button (111). A projection of the first metal bracket (151) in a second direction is located in a region in which the first antenna (121) is located. A second metal bracket (152) is disposed on a side that is of the second antenna (122) and that is away from the second button (112). A projection of the second metal bracket (152) in the second direction is located in a region in which the second antenna (122) is located. The second direction is perpendicular to a main plane of the first button (111). The button assembly, the electronic device (100), and the method for manufacturing a button bracket can not only improve structural strength of the button assembly, but also meet a performance requirement for the antennas.

## Description

This application claims priority to Chinese Patent Application No. 202311744672.9, filed with the China National Intellectual Property Administration on December 17, 2023 and entitled "BUTTON ASSEMBLY, ELECTRONIC DEVICE, AND METHOD FOR MANUFACTURING BUTTON BRACKET", which is incorporated herein by reference in its entirety.

### TECHNICAL FIELD

This application relates to the technical field of electronic devices, and specifically, to a button assembly, an electronic device, and a method for manufacturing a button bracket.

### BACKGROUND

A plurality of antennas are usually disposed in an electronic device to satisfy various communication functions of the electronic device, such as Bluetooth, a mobile hotspot (wireless fidelity, Wi-Fi), and calls. There is an antenna slot between different antennas, to reduce poor coupling between the antennas. When the antenna slot is provided at a middle position of a side button of the electronic device, a structure needs to meet both an assembly strength requirement for the side button and a performance requirement for the antennas.

In the conventional technology, a flexible printed circuit (flexible printed circuit, FPC) bracket made of a pure plastic material is usually used. The FPC bracket may be disposed on a side that is of the antennas and that is away from the side button, to avoid poor coupling between two antenna stubs. At least a part of the FPC bracket may be further connected to a mounting ear of the side button, to prevent the side button from being detached from the electronic device. However, overall strength of the FPC bracket made of the pure plastic material is poor. In particular, a part that is of the bracket and that is located at a position of the mounting ear of the side button is prone to deformation or even fracture. Disposing a steel sheet at a position of the antenna slot to improve structural strength may lead to a change in stub lengths of the antennas, and even changes properties of the antennas, making it difficult to meet a function requirement for the antennas.

### SUMMARY

This application provides a button assembly, an electronic device, and a method for manufacturing a button bracket, which can not only improve structural strength of the button assembly, but also meet a performance requirement for antennas.

According to a first aspect, a button assembly is provided, including: a first button and a second button, where the first button and the second button are arranged in a first direction; a first antenna and a second antenna, where there is a slot between the first antenna and the second antenna in the first direction, and the slot is located between the first button and the second button; and a first metal bracket and a second metal bracket, where the first metal bracket is disposed on a side that is of the first antenna and that is away from the first button, a projection of the first metal bracket in a second direction is located in a region in which the first antenna is located, the second metal bracket is disposed on a side that is of the second antenna and that is away from the second button, a projection of the second metal bracket in the second direction is located in a region in which the second antenna is located, and the second direction is perpendicular to a main plane of the first button.

In embodiments provided in this application, when the antenna slot between the first antenna and the second antenna is located between the first button and the second button, the metal brackets are disposed on the sides that are of the first antenna and the second antenna and that are away from the buttons. This can improve structural strength of the button assembly, and reduce deformation and fracture caused by pressing the button assembly for a plurality of times. The projection of the first metal bracket in the second direction is located in the region in which the first antenna is located, and the projection of the second metal bracket in the second direction is located in the region in which the second antenna is located. This can avoid a change in stub lengths of the antennas caused by disposing the metal brackets, to reduce poor coupling between the antennas and enable the button assembly to meet a performance requirement for the antennas.

With reference to the first aspect, in some implementations of the first aspect, a distance between the first metal bracket and the second metal bracket in the first direction is greater than a distance between the first antenna and the second antenna in the first direction.

In embodiments provided in this application, the distance between the first metal bracket and the second metal bracket in the first direction is greater than the distance between the first antenna and the second antenna in the first direction. This can further prevent the metal brackets from affecting the stub lengths of the antennas, to enable the button assembly to meet the performance requirement for the antennas.

With reference to the first aspect, in some implementations of the first aspect, the first button includes a first button body and a first mounting ear. The first mounting ear is disposed at an end of the first button body. The first mounting ear and the first button body are respectively disposed on two sides of the first antenna in the second direction. The first antenna includes a first through hole. The projection of the first metal bracket in the second direction at least partially overlaps a projection of the first through hole in the second direction. At least a part of the first metal bracket is disposed between the first antenna and the first mounting ear in the second direction. A projection of the first mounting ear in the second direction at least partially overlaps the projection of the first metal bracket in the second direction.

In embodiments provided in this application, the projection of the first metal bracket in the second direction at least partially overlaps the projection of the first through hole in the second direction, at least a part of the first metal bracket is disposed between the first antenna and the first mounting ear in the second direction, and the projection of the first mounting ear in the second direction at least partially overlaps the projection of the first metal bracket in the second direction, so that the first metal bracket can block the first mounting ear, to prevent the first mounting ear from easily falling out of the first through hole.

With reference to the first aspect, in some implementations of the first aspect, the second button includes a second button body and a second mounting ear. The second mounting ear is disposed at an end of the second button body. The second mounting ear and the second button body are respectively disposed on two sides of the second antenna in the second direction. The second antenna includes a second through hole. The projection of the second metal bracket in the second direction at least partially overlaps a projection of the second through hole in the second direction. At least a part of the second metal bracket is disposed between the second antenna and the second mounting ear in the second direction. A projection of the second mounting ear in the second direction at least partially overlaps the projection of the second metal bracket in the second direction.

In embodiments provided in this application, the projection of the second metal bracket in the second direction at least partially overlaps the projection of the second through hole in the second direction, at least a part of the second metal bracket is disposed between the second antenna and the second mounting ear in the second direction, and the projection of the second mounting ear in the second direction at least partially overlaps the projection of the second metal bracket in the second direction, so that the second metal bracket can block the second mounting ear, to prevent the second mounting ear from easily falling out of the second through hole.

With reference to the first aspect, in some implementations of the first aspect, the button assembly further includes a non-metal bracket. The non-metal bracket is disposed on a side that is of the first antenna and that is away from the first button body. The first metal bracket and the second metal bracket are connected to the non-metal bracket.

In embodiments provided in this application, the button assembly includes the non-metal bracket, and the first metal bracket and the second metal bracket are connected to the non-metal bracket, so that positions of the metal brackets can be constant.

With reference to the first aspect, in some implementations of the first aspect, the first metal bracket includes a first planar part and a first bent part. An included angle is formed between the first planar part and the first bent part. The first metal bracket is connected to the non-metal bracket through the first bent part.

In embodiments provided in this application, the first metal bracket includes the first planar part and the first bent part, and an included angle is formed between the first planar part and the first bent part. When the first metal bracket is connected to the non-metal bracket through the first bent part, the first metal bracket and the non-metal bracket are not easily separated from each other, and the connection between them has high reliability.

With reference to the first aspect, in some implementations of the first aspect, a dimension of the first metal bracket in the second direction is 3 to 5 times a dimension of the first planar part in the second direction.

In embodiments provided in this application, the dimension of the first metal bracket in the second direction is 3 to 5 times the dimension of the first planar part in the second direction, enabling a more stable connection between the first metal bracket and the non-metal bracket, so that the first metal bracket and the non-metal bracket are not easily separated from each other.

With reference to the first aspect, in some implementations of the first aspect, the second metal bracket includes a second planar part and a second bent part. An included angle is formed between the second planar part and the second bent part. The second metal bracket is connected to the non-metal bracket through the second bent part.

In embodiments provided in this application, the second metal bracket includes the second planar part and the second bent part, and an included angle is formed between the second planar part and the second bent part. When the second metal bracket is connected to the non-metal bracket through the second bent part, the second metal bracket and the non-metal bracket are not easily separated from each other, and the connection between them has high reliability.

With reference to the first aspect, in some implementations of the first aspect, a dimension of the second metal bracket in the second direction is 3 to 5 times a dimension of the second planar part in the second direction.

In embodiments provided in this application, the dimension of the second metal bracket in the second direction is 3 to 5 times the dimension of the second planar part in the second direction, enabling a more stable connection between the second metal bracket and the non-metal bracket, so that the second metal bracket and the non-metal bracket are not easily separated from each other.

With reference to the first aspect, in some implementations of the first aspect, a distance between the first metal bracket and an end that is of the first antenna and that is close to the second antenna in the first direction is greater than or equal to 0.2 mm.

In embodiments provided in this application, the distance between the first metal bracket and the end that is of the first antenna and that is close to the second antenna in the first direction is greater than or equal to 0.2 mm. This can prevent the projection of the first metal bracket in the second direction from overlapping the antenna slot, to avoid adverse impact on performance of the antennas.

With reference to the first aspect, in some implementations of the first aspect, a distance between the second metal bracket and an end that is of the second antenna and that is close to the first antenna in the first direction is greater than or equal to 0.2 mm.

In embodiments provided in this application, the distance between the second metal bracket and the end that is of the second antenna and that is close to the first antenna in the first direction is greater than or equal to 0.2 mm. This can prevent the projection of the second metal bracket in the second direction from overlapping the antenna slot, to avoid adverse impact on the performance of the antennas.

With reference to the first aspect, in some implementations of the first aspect, the first metal bracket and/or the second metal bracket are/is made of steel or copper alloy.

According to a second aspect, a method for manufacturing a button bracket is provided, including: manufacturing a metal bracket, where the metal bracket includes a first metal bracket, a second metal bracket, and a metal connector, and the metal connector is located between the first metal bracket and the second metal bracket; manufacturing a non-metal bracket through an injection molding process, where at least a part of the first metal bracket and at least a part of the second metal bracket are connected to the non-metal bracket; and removing the metal connector.

In embodiments provided in this application, during manufacturing of the button bracket, the metal connector is disposed between the first metal bracket and the second metal bracket, so that relative positions of the first metal bracket and the second metal bracket are constant, and relative displacement between the first metal bracket and the second metal bracket is not likely to occur in the injection molding process.

With reference to the second aspect, in some implementations of the second aspect, a groove is provided between the first metal bracket and the non-metal bracket and between the second metal bracket and the non-metal bracket.

According to a third aspect, an electronic device is provided, including the button assembly according to any one of the first aspect or the possible implementations of the first aspect. The first button and the second button are disposed on a same side of the electronic device.

With reference to the third aspect, in some implementations of the third aspect, the electronic device includes a middle frame. The first antenna and the second antenna are disposed in accommodating space enclosed by the middle frame, or the first antenna and the second antenna are at least parts of the middle frame.

### BRIEF DESCRIPTION OF DRAWINGS

FIG. 1 is a diagram of a structure of an electronic device;
FIG. 2 is a diagram of a structure of a button assembly;
FIG. 3 is an exploded view of a structure of a button assembly according to an embodiment of this application;
FIG. 4 is a sectional view of a structure of a button assembly according to an embodiment of this application;
FIG. 5 is diagrams of structures of a first button and a second button according to an embodiment of this application;
FIG. 6 is a diagram of a structure of a middle frame according to an embodiment of this application;
FIG. 7 is a diagram of structures of antennas according to an embodiment of this application;
FIG. 8 is a diagram of structures of metal brackets according to an embodiment of this application;
FIG. 9 is a diagram of structures of metal brackets according to an embodiment of this application;
FIG. 10 is a diagram of a structure of a non-metal bracket according to an embodiment of this application;
FIG. 11 is a diagram of an assembly structure of metal brackets and a non-metal bracket according to an embodiment of this application;
FIG. 12 is a sectional view of a structure of metal brackets and a non-metal bracket according to an embodiment of this application;
FIG. 13 is a schematic flowchart of a method for manufacturing a button bracket according to an embodiment of this application; and
FIG. 14 is a diagram of an assembly structure of metal brackets and a non-metal bracket according to an embodiment of this application.

### DESCRIPTION OF EMBODIMENTS

The following describes technical solutions in this application with reference to accompanying drawings.

Reference to "an embodiment", "some embodiments", or the like described in this specification indicates that a specific feature, structure, or characteristic described with reference to the embodiment is included in one or more embodiments of this application. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner.

In embodiments of this application, "first", "second", and the like are merely intended to indicate that a plurality of objects are different. For example, a first antenna and a second antenna are merely intended to indicate different antennas. The terms should impose no impact on the antennas and a quantity thereof. "First", "second", and the like described above should not impose any limitation on embodiments of this application.

The terms "include", "comprise", "have", and their variants all mean "include but are not limited to", unless otherwise specifically emphasized in another manner.

In embodiments of this application, unless otherwise specified, a quantity of nouns indicates "a singular noun or a plural noun", that is, "one or more". "At least one" means one or more, "a plurality of" means two or more, and "more" in "one or more types" means two or more similar types. The term "and/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between associated objects. For example, A/B indicates A or B. "At least one of the following items (pieces)" or a similar expression thereof refers to any combination of these items, including a single item (piece) or any combination of a plurality of items (pieces). For example, at least one item (piece) of a, b, or c may represent: a, b, c, a-b, a-c, b-c, or a-b-c, where a, b, and c may be singular or plural.

In the descriptions of embodiments of this application, it should be noted that terms "installation" and "connection" should be understood in a broad sense unless there is a clear stipulation and limitation. For example, "connection" may be a detachable connection, a nondetachable connection, a direct connection, or an indirect connection through an intermediate medium. "Fastened" means that two parts are connected to each other and a relative position relationship remains unchanged after the two parts are connected. "Rotatable connection" means that two parts are connected to each other and can rotate relative to each other after the two parts are connected to each other. "Slidable connection" means that two parts are connected to each other and can slide relative to each other after the two parts are connected to each other. Orientation terms mentioned in embodiments of this application, for example, "up", "down", "inside", and "outside", are merely directions with reference to the accompanying drawings. Therefore, the orientation terms are used to better and more clearly describe and understand embodiments of this application, instead of indicating or implying that a specified apparatus or element should have a specific orientation, and be constructed and operated in the specific orientation. Therefore, this cannot be understood as a limitation on embodiments of this application.

In embodiments of this application, same reference numerals indicate same components or parts. For same components or parts in embodiments of this application, only one component or part may be marked with a reference numeral in the figure as an example. It should be understood that, this is also applicable to reference numerals of other same components or parts. In addition, parts in the accompanying drawings are not drawn based on an actual scale. Dimensions and sizes of the parts shown in the figures are merely examples, and should not be understood as a limitation on this application.

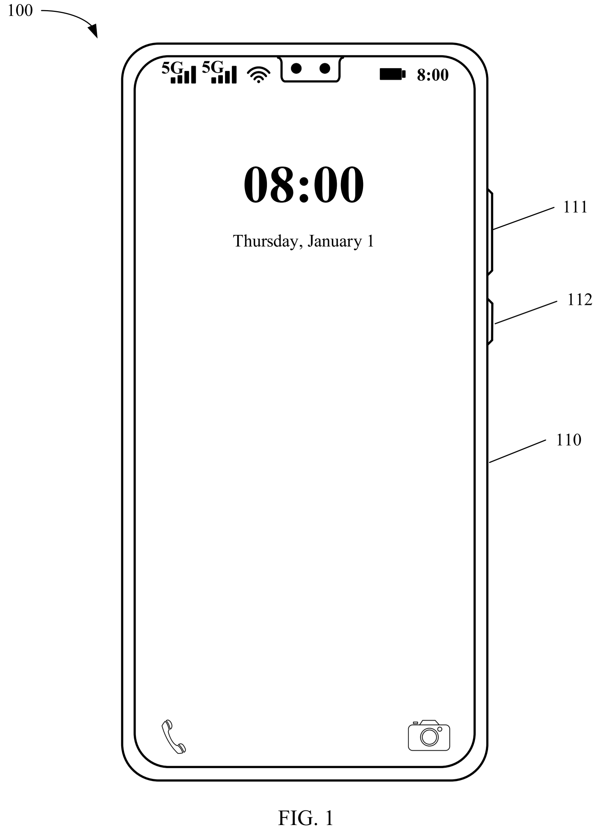

FIG. 1 is a diagram of a structure of an electronic device 100. A button assembly may be disposed on a side edge of the electronic device 100, for example, may be disposed on a right side of the electronic device 100. For example, the button assembly may include a power button 112 and a volume button 111. The power button 112 may be configured to implement functions such as turning on and off a screen of the electronic device 100, and powering on and off the electronic device 100. The volume button 111 may be configured to implement functions such as increasing or decreasing audio and video playing volume of the electronic device 100, and taking a screenshot. The power button 112 may also be referred to as a first button, and the volume button 111 may also be referred to as a second button. Alternatively, the power button 112 may be referred to as a second button, and the volume button 111 may be referred to as a first button. The power button 112 and the volume button 111 may be disposed on a same side of the electronic device 100, or may be disposed on different sides of the electronic device 100. A structure of the button assembly needs to meet a strength requirement, so that the button assembly can withstand a plurality of presses without deformation, fracture, or the like.

A plurality of antennas are usually further disposed in the electronic device 100 to meet different communication requirements. There is a slot between the plurality of antennas, to reduce poor coupling between the antennas. When the slot between the antennas is provided at or near the button, the structure needs to meet both a structural strength requirement for the button and a performance requirement for the antennas.

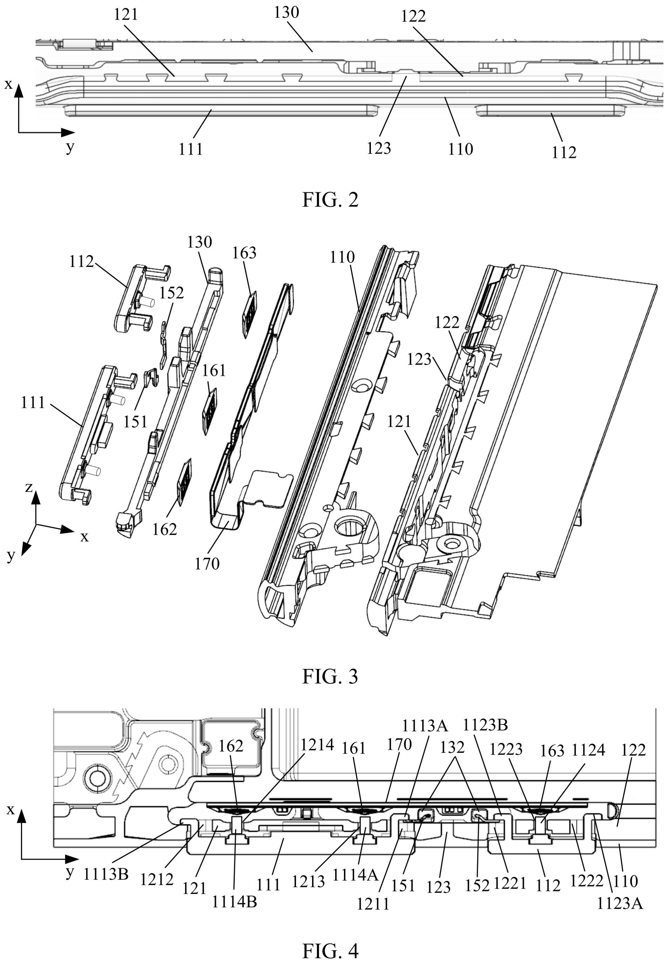

FIG. 2 is a diagram of a structure of a button assembly in the conventional technology. A middle frame 110 may be made of a non-metallic material. A first antenna 121 and a second antenna 122 are disposed in the middle frame 110. A plastic bracket 130 is disposed on a side that is of the first antenna 121 and the second antenna 122 and that is away from a first button 111 and a second button 112. The plastic bracket 130 may also be referred to as a non-metal bracket. The plastic bracket 130 may be configured to support an FPC. For example, a side that is of the plastic bracket 130 and that is away from the first antenna 121 and the second antenna 122 may include a groove, and the FPC may be disposed in the groove. In addition, one mounting ear of the first button 111 and one mounting ear of the second button 112 may be connected to the plastic bracket 130, to prevent the first button 111 or the second button 112 from being detached from an electronic device. A solution of using the plastic bracket 130 can reduce poor coupling between two antenna stubs. However, overall strength of the plastic bracket 130 is poor. In particular, a part that is of the plastic bracket 130 and that is located at a position of the mounting ear is prone to fracture or deformation. Disposing a steel sheet at a position of an antenna slot to improve structural strength can easily lead to a change in stub lengths of the antennas, and even changes properties of the antennas, making it difficult to meet a function requirement for the antennas. Therefore, it is necessary to provide a button assembly that can meet both a performance requirement for an antenna and a structural strength requirement for a button.

The following describes in detail a structure of a button assembly provided in embodiments of this application with reference to the accompanying drawings. First, refer to an exploded view of the structure of the button assembly shown in FIG. 3 and a sectional view of the structure of the button assembly along an xy plane shown in FIG. 4.

The button assembly may include a first button 111 and a second button 112. The first button 111 and the second button 112 may be disposed on a same side of an electronic device. The first button 111 and the second button 112 may be arranged in a first direction. The first direction may be a length direction of the first button 111 and the second button 112, namely, a y-axis direction shown in the figure. The first button 111 and the second button 112 may include parts disposed outside a middle frame 110 of the electronic device, so that a user can press the first button 111 and the second button 112. The first button 111 and the second button 112 may further include parts disposed inside the middle frame 110 of the electronic device, which are configured to electrically connect the first button 111 and the second button 112 to a circuit board when the first button 111 and the second button 112 are pressed, to implement different functions of the electronic device.

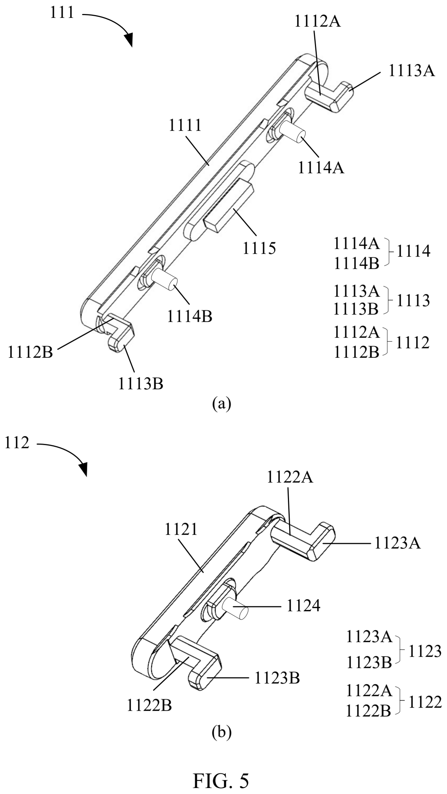

Specifically, refer to button structures shown in FIG. 5. (a) in FIG. 5 shows a structure of the first button 111. (b) in FIG. 5 shows a structure of the second button 112. As shown in (a) in FIG. 5, the first button 111 may include a first button body 1111. A cross section of the first button body 1111 along a yz plane may be, for example, annular or rectangular. The first button 111 may further include a first mounting ear 1113. There may be two first mounting ears 1113. For example, first mounting ears 1113A and 1113B may be included and may be respectively disposed at two ends of the first button body 1111. The two ends of the first button body 1111 may be two ends of the first button body 1111 in the first direction. A main plane of the first mounting ear 1113 may be parallel to a main plane of the first button body 1111. The main plane of the first button body 1111 may be a surface of the first button body 1111 with a relatively large planar area, namely, the yz plane shown in the figure. The main plane of the first button body 1111 may also be referred to as a main plane of the first button 111. Similarly, the main plane of the first mounting ear 1113 may be a surface of the first mounting ear 1113 with a relatively large planar area, namely, the yz plane shown in the figure. The first button 111 may further include a first connection rod 1112. The first connection rod 1112 may be disposed between the first mounting ear 1113 and the first button body 1111, and is configured to connect the first mounting ear 1113 and the first button body 1111. When the first button 111 is disposed in the electronic device, at least a part of the first button body 1111 may be located outside the middle frame 110 for the user to press the first button 111. The first mounting ear 1113 and the first connection rod 1112 may be located inside the middle frame 110.

As shown in (b) in FIG. 5, similar to the structure of the first button 111, the second button 112 may include a second button body 1121. When the first button 111 is a volume button and the second button 112 is a power button, a dimension of the second button 112 in the y-axis direction may be less than a dimension of the first button in the y-axis direction. The second button 112 may include a second mounting ear 1123. There may be two second mounting ears 1123. For example, second mounting ears 1123A and 1123B may be included and may be respectively disposed at two ends of the second button body 1121. The second button 112 may further include a second connection rod 1122. The second connection rod 1122 may be disposed between the second mounting ear 1123 and the second button body 1121, and is configured to connect the second mounting ear 1123 and the second button body 1121. When the second button 112 is disposed in the electronic device, at least a part of the second button body 1121 may be located outside the middle frame 110 for the user to press the second button 112. The second mounting ear 1123 and the second connection rod 1122 may be located inside the middle frame 110.

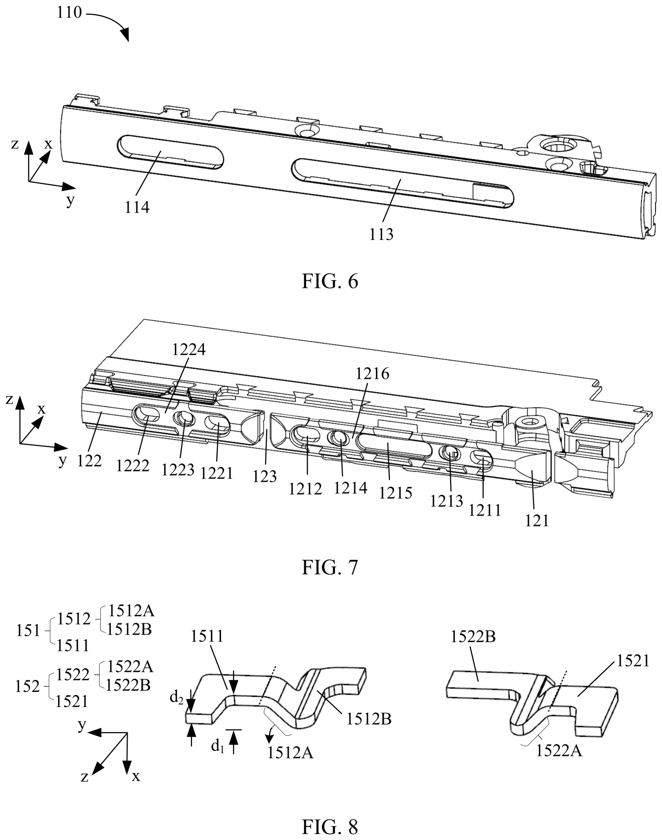

For example, for a structure of the middle frame, refer to a structure shown in FIG. 6. The middle frame 110 may include a through hole 113. A position of the through hole 113 may correspond to a position of the first button 111, a dimension of the through hole 113 in the y-axis direction may be the same as a dimension of the first button body 1111 in the y-axis direction, and a dimension of the through hole 113 in a z-axis direction may be the same as a dimension of the first button body 1111 in the z-axis direction, so that the first button body 1111 can be at least partially accommodated in the through hole 113. In addition, when the first button 111 is pressed, the first button body 1111 can be displaced in a second direction within the through hole 113. The second direction may be a direction perpendicular to the main plane of the first button 111, or a direction perpendicular to the main plane of the first button body 1111. The second direction is an x-axis direction shown in the figure. The middle frame 110 may further include a through hole 114. A position of the through hole 114 may correspond to a position of the second button 112, a dimension of the through hole 114 in the y-axis direction may be the same as a dimension of the second button body 1121 in the y-axis direction, and a dimension of the through hole 114 in the z-axis direction may be the same as a dimension of the second button body 1121 in the z-axis direction, so that the second button body 1121 can be at least partially accommodated in the through hole 114. In addition, when the second button 112 is pressed, the second button body 1121 can be displaced in the second direction within the through hole 114.

The button assembly may further include a first antenna 121 and a second antenna 122. For structures of the first antenna 121 and the second antenna 122, refer to a diagram of structures of antennas shown in FIG. 7. The first antenna 121 and the second antenna 122 may be disposed in the middle frame 110, that is, may be disposed on a side that is of the middle frame 110 and that is away from the first button body 1111. There may be a slot 123 between the first antenna 121 and the second antenna 122 in the first direction. The slot 123 may be formed by two ends that are of the first antenna 121 and the second antenna 122 and that are close to each other in the first direction. The slot 123 may be located between the first button 111 and the second button 112. For example, a dimension of the slot 123 in the first direction may be 0.8 mm to 1.2 mm. In other words, a distance between the two ends that are of the first antenna 121 and the second antenna 122 and that are close to each other in the first direction may be 0.8 mm to 1.2 mm.

It should be noted that the first antenna 121 and the second antenna 122 may be disposed in the middle frame 110, or may be parts of the middle frame 110. That the first antenna 121 and the second antenna 122 are the parts of the middle frame 110 may mean that the structure of the middle frame 110 is reused to implement an antenna function, to reduce a size and a weight of the electronic device. Shapes and structures of the antennas and the middle frame 110 are not limited in this application. When the first antenna 121 and the second antenna 122 are the parts of the structure of the middle frame 110, the middle frame 110 may be made of a metallic material. When the first antenna 121 and the second antenna 122 are disposed in the middle frame 110, the middle frame 110 may be made of a non-metallic material, to prevent the middle frame 110 from affecting performance of the antennas. In addition, there may be a plurality of slots between the first antenna 121 and the second antenna 122 in the first direction. The slot 123 may be one of the plurality of slots, or at least one of the plurality of slots may be located between the first button 111 and the second button 112. The slot between the antennas may be filled with a non-metallic material, for example, may be filled with at least a part of the structure of the middle frame 110, so that a structure of the electronic device is more stable. The first antenna 121 and the second antenna 122 may be of irregular shapes, to adapt to the shape of the middle frame 110 and avoid other components in the middle frame 110.

To enable the first button 111 and the second button 112 to be stably disposed in the electronic device, through holes may be further provided at positions that are of the first antenna 121 and the second antenna 122 and that correspond to the first button 111 and the second button 112. Specifically, the first antenna 121 may include a through hole 1211 and a through hole 1212. Positions of the through hole 1211 and the through hole 1212 may respectively correspond to positions of the first connection rod 1112A and the first connection rod 1112B. Dimensions of the through hole 1211 in the y-axis direction and the z-axis direction may be respectively greater than dimensions of the first connection rod 1112A in the y-axis direction and the z-axis direction, so that the first connection rod 1112A can be accommodated in the through hole 1211. In addition, when the first button 111 is pressed, the first connection rod 1112A can be displaced in the second direction within the through hole 1211. Similarly, dimensions of the through hole 1212 in the y-axis direction and the z-axis direction may be respectively greater than dimensions of the first connection rod 1112B in the y-axis direction and the z-axis direction, so that the first connection rod 1112B can be accommodated in the through hole 1212. In this example, the through hole 1211 may also be referred to as a first through hole.

Further, to prevent the first button 111 from being detached from the electronic device, a projection of the first mounting ear 1113B in the second direction does not overlap at least partially a projection of the through hole 1212 in the second direction. In this way, movement of the first mounting ear 1113 in a negative x-axis direction shown in the figure can be blocked by the first antenna 121, to prevent the first button 111 from being detached from the electronic device. The first mounting ear 1113B may be a mounting ear that is of the first button 111 and that is away from the second button 112.

To facilitate assembly of the first button 111, a projection of the first mounting ear 1113A in the second direction may be located in a region in which the through hole 1211 is located, or the dimension of the through hole 1211 in the y-axis direction may be greater than or equal to a dimension of the first mounting ear 1113A in the y-axis direction. The first mounting ear 1113A may be a mounting ear that is of the first button 111 and that is close to the second button 112.

Similar to the structure of the first antenna 121, the second antenna 122 may include a through hole 1221 and a through hole 1222. Dimensions of the through hole 1221 in the y-axis direction and the z-axis direction may be respectively greater than dimensions of the second connection rod 1122B in the y-axis direction and the z-axis direction, and dimensions of the through hole 1222 in the y-axis direction and the z-axis direction may be respectively greater than dimensions of the second connection rod 1122A in the y-axis direction and the z-axis direction, so that the second connection rods 1122B and 1122A of the second button 112 can be respectively accommodated in the through holes 1221 and 1222. In addition, when the second button 112 is pressed, the second connection rods 1122A and 1122B can be respectively displaced in the second direction within the through holes 1222 and 1221. The through hole 1221 may also be referred to as a second through hole.

Further, to prevent the second button 112 from being detached from the electronic device, a projection of the second mounting ear 1123A in the second direction does not overlap at least partially a projection of the through hole 1222 in the second direction. In this way, movement of the second mounting ear 1121A in the negative x-axis direction shown in the figure can be blocked by the second antenna 122, to prevent the second button 112 from being detached from the electronic device. The second mounting ear 1121A may be a mounting ear that is of the second button 112 and that is away from the first button 111.

To facilitate assembly of the second button 112, a projection of the second mounting ear 1123B in the second direction may be located in a region in which the through hole 1221 is located, or the dimension of the through hole 1221 in the y-axis direction may be greater than or equal to a dimension of the second mounting ear 1123B in the y-axis direction. The second mounting ear 1123B may be a mounting ear that is of the second button 112 and that is close to the first button 111.

A side that is of the first antenna 121 and that is close to the middle frame 110 may further include a groove 1216. Dimensions of the groove 1216 in the y-axis direction and the z-axis direction may be respectively greater than or equal to the dimensions of the first button body 1111 in the y-axis direction and the z-axis direction. When the first button 111 is pressed, at least a part of a surface that is of the first button body 1111 and that is close to the middle frame 110 may be in contact with the groove 1216. The groove 1216 may limit movement of the first button 111 in a positive x-axis direction. Similarly, a side that is of the second antenna 122 and that is close to the middle frame 110 may include a groove 1224. Dimensions of the groove 1224 in the y-axis direction and the z-axis direction may be respectively greater than or equal to the dimensions of the second button body 1121 in the y-axis direction and the z-axis direction. When the second button 112 is pressed, at least a part of a surface that is of the second button body 1121 and that is close to the middle frame 110 may be in contact with the groove 1224. The groove 1224 may limit movement of the second button 112 in the positive x-axis direction.

In some embodiments, the button assembly may further include a first metal bracket 151 and a second metal bracket 152. The first metal bracket 151 may be disposed on a side that is of the first antenna 121 and that is away from the first button 111, or on a side that is of the first antenna 121 and that is away from the first button body 1111. A projection of the first metal bracket 151 in the second direction may be located in a region in which the first antenna 121 is located. The region in which the first antenna 121 is located may be a region covered by the entire first antenna 121, including a region in which a hole in the first antenna 121 is located. The projection of the first metal bracket 151 in the second direction may be located in the region in which the first antenna 121 is located, that is, the projection of the first metal bracket 151 in the second direction does not overlap that of the slot 123.

The second metal bracket 152 may be disposed on a side that is of the second antenna 122 and that is away from the second button 112, or on a side that is of the second antenna 122 and that is away from the second button body 1121. A projection of the second metal bracket 152 in the second direction may be located in a region in which the second antenna 122 is located. The region in which the second antenna 122 is located may be a region covered by the entire second antenna 122, including a region in which a hole in the second antenna 122 is located. The projection of the second metal bracket 152 in the second direction is located in the region in which the second antenna 122 is located, that is, the projection of the second metal bracket 152 in the second direction does not overlap that the slot 123.

The projections of the first metal bracket 151 and the second metal bracket 152 in the second direction are respectively located in the regions in which the first antenna 121 and the second antenna 122 are located, so that the first metal bracket 151 and the second metal bracket 152 can be prevented from affecting stub lengths of the antennas, or even affecting properties of the antennas, to reduce coupling issues between the first antenna 121 and the second antenna 122. In addition, disposing the first metal bracket 151 and the second metal bracket 152 can improve structural strength of the button assembly, and reduce mechanical part fracture and deformation caused by pressing the button for a plurality of times.

In some embodiments, a distance between the first metal bracket 151 and the second metal bracket 152 in the first direction may be greater than a distance between the first antenna 121 and the second antenna 122 in the first direction. In other words, the first metal bracket 151 may be spaced apart from the slot 123, and the second metal bracket 152 may also be spaced apart from the slot 123, to further ensure that disposing the first metal bracket 151 and the second metal bracket 152 does not affect the performance of the first antenna 121 and the second antenna 122.

In some embodiments, a distance between the first metal bracket 151 and an end that is of the first antenna 121 and that is close to the second antenna 122 in the first direction may be greater than or equal to 0.2 mm. The end that is of the first antenna 121 and that is close to the second antenna 122 may be a position that is of the first antenna 121 and that is closest to the second antenna 122 in the first direction. That the distance between the first metal bracket 151 and the end that is of the first antenna 121 and that is close to the second antenna 122 is greater than or equal to 0.2 mm may be that a distance between an end that is of the first metal bracket 151 and that is close to the slot 123 and the end that is of the first antenna 121 and that is close to the second antenna 122 is greater than or equal to 0.2 mm.

In some embodiments, a distance between the second metal bracket 152 and an end that is of the second antenna 122 and that is close to the first antenna 121 in the first direction may be greater than or equal to 0.2 mm. The end that is of the second antenna 122 and that is close to the first antenna 121 may be a position that is of the second antenna 122 and that is closest to the first antenna 121 in the first direction. The distance between the second metal bracket 152 and the end that is of the second antenna 122 and that is close to the first antenna 121 may be a distance between an end that is of the second metal bracket 152 and that is close to the slot 123 and the end that is of the second antenna 122 and that is close to the first antenna 121.

For structures of the first metal bracket 151 and the second metal bracket 152, refer to structures shown in FIG. 8. The first metal bracket 151 may include a first planar part 1511, namely, a part that is of the first metal bracket 151 and that is on a left side of a dashed line in FIG. 8, and a first bent part 1512, namely, a part that is of the first metal bracket 151 and that is on a right side of the dashed line in FIG. 8. The first planar part 1511 may be parallel to the yz plane shown in the figure. The first planar part 1511 may be of a zigzag structure shown in the figure, or may be of a linear structure (not shown in FIG. 8). An included angle may be formed between the first bent part 1512 and the first planar part 1511. For example, the first bent part 1512 shown in FIG. 8 may include a first region 1512A and a second region 1512B. The first region 1512A is a region that is of the first bent part 1512 and that is connected to the first planar part 1511. That an included angle is formed between the first bent part 1512 and the first planar part 1511 may mean that an included angle is formed between the first region 1512A and the first planar part 1511. For example, the first region 1512A and the first planar part 1511 may be located on different planes, so that an included angle is formed between a plane on which the first region 1512A is located and a plane on which the first planar part 1511 is located. The second region 1512B may be a region that is of the first bent part 1512 and that is away from the first planar part 1511. An included angle may be formed between the second region 1512B and the first region 1512A. For example, a plane on which the second region 1512B is located may be the yz plane shown in the figure, that is, may be parallel to the first planar part 1511. Alternatively, the plane on which the second region 1512B is located may not be parallel to the plane on which the first planar part 1511 is located, provided that an included angle is formed between the second region 1512B and the first region 1512A.

When the first metal bracket 151 is connected to a non-metal bracket 130, the first bent part 1512 may be embedded in the non-metal bracket 130. For example, the first metal bracket 151 and the non-metal bracket 130 may be formed through an injection molding process, so that the first metal bracket 151 may be connected to the non-metal bracket 130 through the first bent part 1512. The first metal bracket 151 includes the first bent part 1512, enabling a more stable connection between the first metal bracket 151 and the non-metal bracket 130, so that they are not easily separated from each other. In addition, the structural strength of the button assembly is improved, to prevent deformation or fracture in regions that are of the first metal bracket 151 and the non-metal bracket 130 and that are close to the first mounting ear.

In the first metal bracket 151 shown in FIG. 8, the second region 1512B extends in a negative z-axis direction from an end that is of the first region 1512A and that is away from the first planar part 1511. Alternatively, the second region 1512B may extend in a positive z-axis direction, or may extend in a direction at an included angle with a z-axis. This is not limited in this application.

In some embodiments, a dimension of the first metal bracket 151 in the second direction may be 3 to 5 times a dimension of the first planar part 1511 in the second direction. The structure of the first metal bracket 151 shown in FIG. 8 is used as an example. The dimension of the first metal bracket 151 in the second direction may be a longest distance between the first planar part 1511 and the second region 1512B in the second direction, which is labeled as d₁ in FIG. 8. The dimension of the first planar part 1511 in the second direction may also be referred to as a thickness of the first planar part 1511, which is labeled as d₂ in FIG. 8. The thickness of the first planar part 1511 may also be referred to as a thickness of the first metal bracket 151. Thicknesses of the first region 1512A and the second region 1512B may be the same as the thickness of the first planar part 1511. The thickness of the first region 1512A may be a dimension of the first region 1512A in a direction perpendicular to a main plane of the first region 1512A.

Similar to the structure of the first metal bracket 151, the second metal bracket 152 may include a second planar part 1521 and a second bent part 1522. The second planar part 1521 is a part that is of the second metal bracket 152 and that is on a right side of a dashed line in FIG. 8. The second bent part 1522 is a part that is of the second metal bracket 152 and that is on a left side of the dashed line in FIG. 8. The second planar part 1521 may be parallel to the yz plane shown in the figure. The second planar part 1521 may be of a zigzag structure shown in the figure, or may be of a linear structure (not shown in FIG. 8). An included angle may be formed between the second bent part 1522 and the second planar part 1521. For example, the second bent part 1522 shown in FIG. 8 may include a third region 1522A and a fourth region 1522B. The third region 1522A is a region that is of the second bent part 1522 and that is connected to the second planar part 1521. That an included angle is formed between the second bent part 1522 and the second planar part 1521 may mean that an included angle is formed between the third region 1522A and the second planar part 1521. For example, the third region 1522A and the second planar part 1521 may be located on different planes, so that an included angle is formed between a plane on which the third region 1522A is located and a plane on which the second planar part 1521 is located. The fourth region 1522B may be a region that is of the second bent part 1522 and that is away from the second planar part 1521. An included angle may be formed between the fourth region 1522B and the third region 1522A. For example, a plane on which the fourth region 1522B is located may be the yz plane shown in the figure, that is, may be parallel to the second planar part 1521. Alternatively, the plane on which the fourth region 1522B is located may not be parallel to the plane on which the second planar part 1521 is located, provided that an included angle is formed between the fourth region 1522B and the third region 1522A.

When the second metal bracket 152 is connected to the non-metal bracket, the second bent part 1522 may be embedded in the non-metal bracket 130. For example, the second metal bracket 152 and the non-metal bracket 130 may be formed through the injection molding process, so that the second metal bracket 152 may be connected to the non-metal bracket 130 through the second bent part 1522. The second metal bracket 152 includes the second bent part 1522, enabling a more stable connection between the second metal bracket 152 and the non-metal bracket 130, so that they are not easily separated from each other, and structural strength of the second metal bracket 152 and the non-metal bracket is improved.

In the second metal bracket 152 shown in FIG. 8, the fourth region 1522B may extend in the negative z-axis direction from an end that is of the third region 1522A and that is away from the second planar part 1521. Alternatively, the fourth region 1522B may extend in the positive z-axis direction, or may extend in a direction at an included angle with the z-axis.

In some embodiments, a dimension of the second metal bracket 152 in the second direction may be 3 to 5 times a dimension of the second planar part 1521 in the second direction. For the structure of the second metal bracket 152 shown in FIG. 8, similar to the first metal bracket 151, the dimension of the second metal bracket 152 in the second direction may be a longest distance between the second planar part 1521 and the fourth region 1522B in the second direction. The dimension of the second planar part 1521 in the second direction may also be referred to as a thickness of the second planar part 1521, or may also be referred to as a thickness of the second metal bracket 152. Thicknesses of the third region 1522A and the fourth region 1522B may be the same as the thickness of the second planar part 1521. The dimension of the second metal bracket 152 in the second direction may be the same as or different from the dimension of the first metal bracket 151 in the second direction. The dimension of the second planar part 1521 in the second direction may be the same as or different from the dimension of the first planar part 1511 in the second direction.

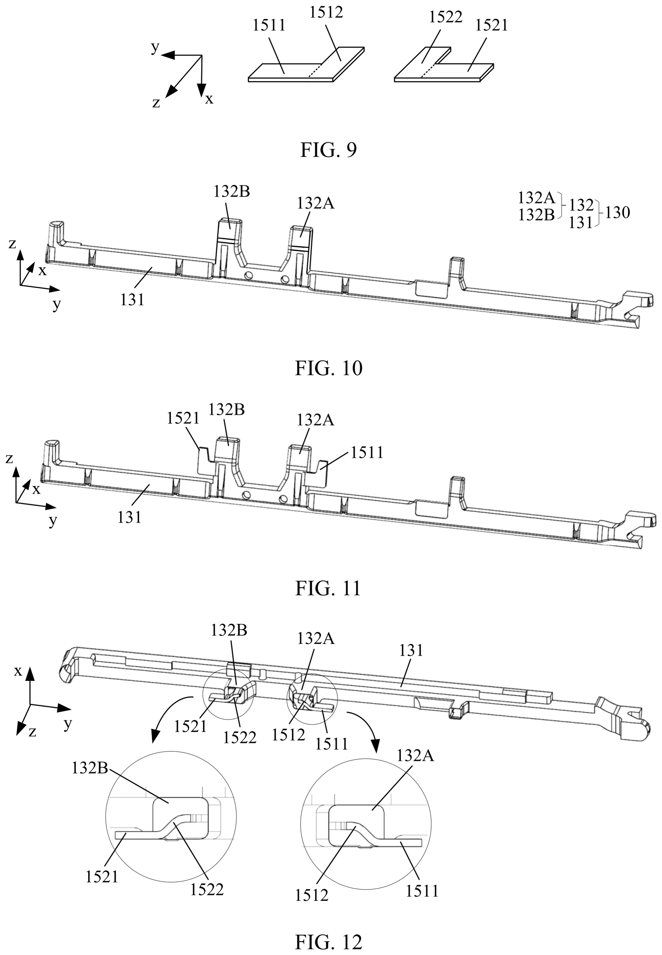

FIG. 9 is another diagram of structures of metal brackets according to an embodiment of this application. For the first metal bracket 151, the first planar part 1511 and the first bent part 1512 may alternatively be located on a same plane, and the first planar part 1511 and the first bent part 1512 may be of a linear structure shown in the figure. The first planar part 1511 may extend in the y-axis direction shown in the figure, and the first bent part 1512 may extend in the z-axis direction shown in the figure, so that an included angle is formed between the first planar part 1511 and the first bent part 1512. Similar to the metal bracket described in FIG. 8, the first bent part 1512 shown in FIG. 9 may be embedded in the non-metal bracket 130. The first metal bracket 151 may be connected to the non-metal bracket 130 through the first bent part 1512, enabling a more stable connection between the first metal bracket 151 and the non-metal bracket 130, so that they are not easily separated from each other.

The second planar part 1521 and the second bent part 1522 of the second metal bracket 152 may alternatively be located on a same plane, and the second planar part 1521 and the second bent part 1522 may be of a linear structure. The second planar part 1521 may extend in the y-axis direction shown in the figure, and the second bent part 1522 may extend in the z-axis direction shown in the figure, so that an included angle is formed between the second planar part 1521 and the second bent part 1522. The second metal bracket 152 may be connected to the non-metal bracket through the second bent part 1522, enabling a more connection between the second metal bracket 152 and the non-metal bracket 130, so that they are not easily separated from each other.

When an overall structure of the first metal bracket 151 and the second metal bracket 152 is the planar structure, the dimensions of the first metal bracket 151 and the second metal bracket 152 in the second direction are respectively the same as the dimensions of the first planar part 1511 and the second planar part 1521 in the second direction. The dimension of the first metal bracket 151 in the second direction may be the same as or different from the dimension of the second metal bracket 152 in the second direction.

It should be noted that the dashed lines in FIG. 8 and FIG. 9 are merely for indicating positions of the planar part and the bent part of the metal bracket, and should not impose a limitation on the structure of the metal bracket.

In some embodiments, the first metal bracket 151 and/or the second metal bracket 152 may be made of steel or copper alloy. For example, the first metal bracket 151 and/or the second metal bracket 152 may be made of 301 stainless steel, 304 stainless steel, or 316 stainless steel, where 301, 304, and 316 may be steel grades. Alternatively, the first metal bracket 151 and/or the second metal bracket 152 may be made of nickel silver or the like. The first metal bracket 151 and/or the second metal bracket 152 are/is made of steel or copper alloy, enabling high strength and good plasticity of the first metal bracket 151 and the second metal bracket 152. This facilitates bending of the first metal bracket 151 and the second metal bracket 152, so that the first metal bracket 151 and the second metal bracket 152 have heights in the second direction. For example, the first metal bracket 151 and the second metal bracket 152 shown in FIG. 8 may be obtained by bending planar metal sheets along preset positions, so that at least parts of the structures of the first metal bracket 151 and the second metal bracket 152 are not on a same plane as the other parts, and they have heights in the second direction. Therefore, when the first metal bracket 151 and the second metal bracket 152 are connected to the non-metal bracket 130, they are not easily separated from the non-metal bracket 130.

As described above, the first metal bracket 151 and the second metal bracket 152 may be respectively connected to the non-metal bracket 130 through the first bent part 1512 and the second bent part 1522. Correspondingly, in a structure shown in FIG. 10, the non-metal bracket 130 may include a trunk part 131 and a protruding part 132. The trunk part 131 may be of a linear structure. A side that is of the trunk part 131 and that is away from the first button 111 may include one or more grooves (not shown in the figure) to accommodate an FPC 170. The protruding part 132 may be disposed on a side of the trunk part 131 in the z-axis direction. There may be two protruding parts 132. For example, protruding parts 132A and 132B shown in the figure may be included. The protruding part 132A may be connected to the first metal bracket 151. The protruding part 132B may be connected to the second metal bracket 152. For a structure in which the first metal bracket 151 and the second metal bracket 152 are fastened to the non-metal bracket 130, refer to a diagram of an overall structure of a button bracket shown in FIG. 11 or a schematic sectional view of the structure of the button bracket along the xy plane shown in FIG. 12. Circles show an enlarged sectional view of a structure of the connection between the first metal bracket 151 and the non-metal bracket 130, and an enlarged sectional view of a structure of the connection between the second metal bracket 152 and the non-metal bracket 130. For example, the first bent part 1511 and the second bent part 1512 may be respectively embedded in the protruding parts 132A and 132B through the injection molding process. A dimension of the protruding part 132A in the x-axis direction may be greater than a dimension of the first metal bracket 151 in the x-axis direction, so that the entire first bent part 1512 can be disposed in the protruding part 132A. A dimension of the protruding part 132B in the x-axis direction may be greater than a dimension of the second metal bracket 152 in the x-axis direction, so that the entire second bent part 1522 can be disposed in the protruding part 132B. In this way, the first metal bracket 151 and the second metal bracket 152 are connected to the non-metal bracket 130. In addition, when the first metal bracket 152 and the second metal bracket 152 are connected to the non-metal bracket 130, the first planar part 1511 may be parallel to the second planar part 1521, and may be parallel to main planes of the protruding parts 132A and 132B.

When the first metal bracket 151, the second metal bracket 152, and the non-metal bracket 130 are disposed in the button assembly or the electronic device, ends that are of the protruding parts 132A and 132B and that are away from the trunk part 131 may be disposed in a groove (not shown in the figure) of the middle frame, to support the non-metal bracket 130. In addition, the first planar part 1511 and the second planar part 1522 can be respectively located over the through hole 1211 and the through hole 1221, to limit displacement of the first mounting ear 1113A and the second mounting ear 1123B in the negative x-axis direction.

With continued reference to the sectional structure shown in FIG. 4, when the first metal bracket 151 is disposed in the electronic device, at least a part of the first metal bracket 151 may be disposed over the through hole 1211, or the projection of the first metal bracket 151 in the second direction may at least partially overlap that of the through hole 1211. In addition, at least a part of the first metal bracket 151 may be disposed between the first mounting ear 1113A and the first antenna 121 in the second direction, and the projection of the first metal bracket 151 in the second direction at least partially overlaps the projection of the first mounting ear 1113A in the second direction. In this way, movement of the first mounting ear 1113A in the negative x-axis direction can be blocked by the first metal bracket 151. This can prevent the first button 111 from falling out of the through hole 1211 and being detached from the electronic device during use. For example, for the first metal bracket 151 shown in FIG. 8 or FIG. 9, an end of the first planar part 1511 may be disposed over the through hole 1211, or at least a partial structure that is of the first planar part 1511 and that is away from the first bent part 1512 may be disposed over the through hole 1211, and the partial structure may be disposed between the first antenna 121 and the first mounting ear 1113A, so that the movement of the first mounting ear 1113A in the negative x-axis direction can be blocked by the partial structure.

Similarly, when the second metal bracket 152 is disposed in the electronic device, at least a part of the second metal bracket 152 may be disposed over the through hole 1221, or the projection of the second metal bracket 152 in the second direction at least partially overlaps that of the through hole 1221. In addition, at least a part of the second metal bracket 152 may be disposed between the second mounting ear 1123B and the second antenna 122 in the second direction, and the projection of the second metal bracket 152 in the second direction at least partially overlaps the projection of the second mounting ear 1123B in the second direction. In this way, movement of the second mounting ear 1123B in the negative x-axis direction can be blocked by the second metal bracket 152. This can prevent the second button 112 from falling out of the through hole 1221 and being detached from the electronic device during use. For the second metal bracket 152 shown in FIG. 8 or FIG. 9, an end of the second planar part 1521 may be disposed over the through hole 1221, or at least a partial structure that is of the second planar part 1521 and that is away from the second bent part 1522 may be disposed over the through hole 1221, and the partial structure may be disposed between the second antenna 122 and the second mounting ear 1123B, so that the movement of the first mounting ear 1123B in the negative x-axis direction can be blocked by the partial structure.

It should be noted that in the button assembly shown in FIG. 4, the first mounting ear 1113B is connected to the first antenna 121, and the first mounting ear 1113A is connected to the first metal bracket 151. That is, the projection of the first mounting ear 1113B in the second direction at least partially overlaps a projection of the first antenna 121 in the second direction, and the projection of the first mounting ear 1113A in the second direction at least partially overlaps the projection of the first metal bracket 151 in the second direction. In this way, the movement of the first mounting ear 1113B in the negative x-axis direction shown in the figure can be blocked by the middle frame 110, and the movement of the first mounting ear 1113A in the negative x-axis direction can be blocked by the first metal bracket 151. In embodiments provided in this application, alternatively, the first mounting ear 1113A may be connected to the first antenna 121, and the first mounting ear 1113B may be connected to the first metal bracket 151. That is, the first metal bracket 151 may alternatively be disposed over the through hole 1212, the projection of the first mounting ear 1113A in the second direction at least partially overlaps the projection of the first antenna 121 in the second direction, and the projection of the first mounting ear 1113B in the second direction at least partially overlaps the projection of the first metal bracket 151 in the second direction. In this way, the movement of the first mounting ear 1113A in the negative x-axis direction shown in the figure can be blocked by the first antenna 121, and the movement of the first mounting ear 1113B in the negative x-axis direction shown in the figure can be blocked by the first metal bracket 151. Similar to the structures of the first button 111 and the first metal bracket 151, the second metal bracket 152 may be disposed at an end of the second mounting ear 1123B and connected to the second mounting ear 1123B, or may be disposed at an end of the second mounting ear 1123A and connected to the second mounting ear 1123A. Details are not described herein.

With continued reference to the structure shown in FIG. 3 or FIG. 4, the button assembly may further include a circuit board 170. The circuit board 170 may be an FPC. The circuit board 170 may be disposed on the side that is of the first antenna 121 and that is away from the first button body 1111. A side that is of the circuit board 170 and that is close to the first button 111 may include a trigger switch. When the first button 111 and the second button 112 are pressed, the trigger switch may be triggered to implement different functions of the electronic device.

Specifically, when the first button 111 is a volume button, the first button 111 may include a first trigger part 1114. There may be two first trigger parts 1114. For example, a first trigger part 1114A and a first trigger part 1114B are included, as shown in (a) in FIG. 5. The first trigger part 1114A and the first trigger part 1114B may be arranged in the first direction, and may be disposed on a same side of the first button body 1111 as the first connection rod 1112. The first trigger part 1114A and the first trigger part 1114B may be of a columnar structure shown in the figure. Correspondingly, the first antenna 121 may include a through hole 1213 and a through hole 1214, as shown in FIG. 7. Positions of the through hole 1213 and the through hole 1214 may respectively correspond to positions of the first trigger part 1114A and the first trigger part 1114B, and may respectively correspond to positions of a trigger switch 161 and a trigger switch 162. A radial dimension of the through hole 1213 may be greater than or equal to a radial dimension of the first trigger part 1114A, and a radial dimension of the through hole 1214 may be greater than or equal to a radial dimension of the first trigger part 1114B. In this way, at least a part of the first trigger part 1114A can be accommodated in the through hole 1213, and at least a part of the first trigger part 1114B can be accommodated in the through hole 1214. In addition, when an end that is of the first button 111 and that is away from the second button 112 is pressed, the end that is of the first button 111 and that is away from the second button 112 can be displaced in the positive x-axis direction. Correspondingly, the first trigger part 1114A can be displaced in the positive x-axis direction within the through hole 1213 and in contact with the trigger switch 161 to trigger a corresponding function, for example, increasing volume. Similarly, when an end that is of the first button 111 and that is close to the second button 112 is pressed, the end that is of the first button and that is close to the second button 112 can be displaced in the positive x-axis direction, and the trigger part 1114B can be displaced in the positive x-axis direction within the through hole 1214 and in contact with the trigger switch 162 to trigger a corresponding function, for example, decreasing volume.

When the second button 112 is a power button, the second button 112 may include a second trigger part 1124. There may be one second trigger part 1124. As shown in FIG. 6, the trigger part 1124 may be disposed between the second mounting ears 1123A and 1123B, for example, may be disposed at a middle position of the second button body 1121. The trigger part 1124 may be disposed on a same side of the second button body 1121 as the second connection rod 1122. The trigger part 1124 may be of a columnar structure. Correspondingly, the second antenna 122 may include a through hole 1223, as shown in FIG. 8. A position of the through hole 1223 may correspond to a position of the trigger part 1124. A radial dimension of the through hole 1223 may be greater than or equal to a radial dimension of the trigger part 1124. When the second button 112 is pressed, at least a part of the second button 112 can be displaced in the positive x-axis direction, and at least a part of the trigger part 1124 can pass through the through hole 1223 and be in contact a trigger switch 163, to trigger a corresponding function, for example, turning on or off a screen.

The first button 111 may further include foam 1115. The foam 1115 may be disposed on a same side of the first button 111 as the first connection rod 1112. The foam 1115 may be disposed at a central position of the first button 111. The foam 1115 may be configured to maintain balance of the first button 111.

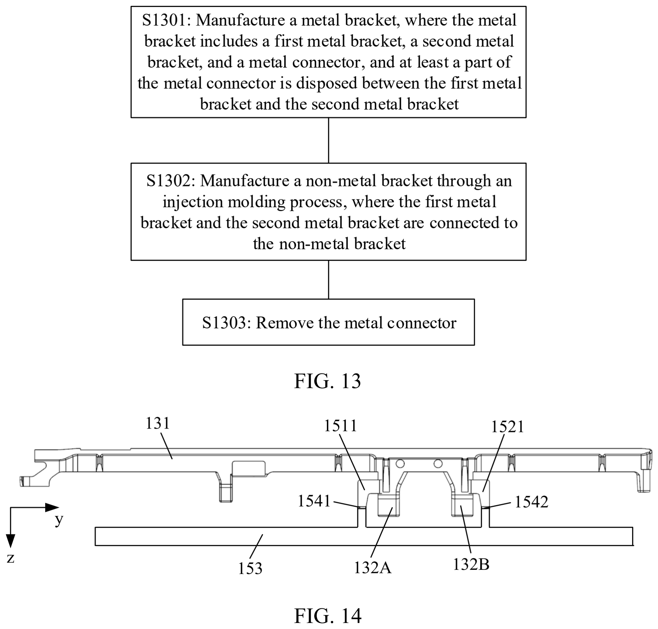

An embodiment of this application further provides a method for manufacturing a button bracket. The method may be used to manufacture the foregoing first metal bracket, second metal bracket, and non-metal bracket. The method may include steps S1301 to S1303, as shown in FIG. 13.

S1301: Manufacture a metal bracket. The metal bracket includes a first metal bracket, a second metal bracket, and a metal connector. At least a part of the metal connector is disposed between the first metal bracket and the second metal bracket.

S1302: Manufacture a non-metal bracket through an injection molding process. The first metal bracket and the second metal bracket are connected to the non-metal bracket.

S1303: Remove the metal connector.

In step S1301, for structures of the first metal bracket 151, the second metal bracket 152, and the metal connector 153, refer to a diagram of a bracket structure shown in FIG. 14. The metal connector 153 may include a first part 1531 and a second part 1532. The first part 1531 may be of a strip structure shown in the figure. There may be two second parts 1532. The second part 1532 may be a protruding part of the first part 1531. The two second parts 1532 may be respectively connected to the first metal bracket 151 and the second metal bracket 152. The first metal bracket 151, the second metal bracket 152, and the metal connector 153 may be an integral structure, for example, may be integrally formed through casting and forging or another process.

In some embodiments, there may be a groove 1541 between the metal connector 153 and the first metal bracket 151, and there may be a groove 1542 between the metal connector 153 and the second metal bracket 152. The groove 1541 and the groove 1542 may be formed through cutting or another process. The grooves 1541 and 1542 may be used to: when the first metal bracket 151 and the second metal bracket 152 are assembled into the electronic device, disconnect the metal connector 153 from the first metal bracket 151 and the second metal bracket 152.

In step S1302, when the non-metal bracket is manufactured through the injection molding process, molten non-metal may be injected into a mold. The molten non-metal may be, for example, molten resin. The non-metal bracket is formed after cooling. During injection molding, the first metal bracket and the second metal bracket may be embedded at preset positions of the mold, so that after the molten non-metal is cooled and molded, the first metal bracket and the second metal bracket can be fastened to it. In this way, the structure of the button bracket shown in FIG. 14 can be obtained after demolding. Disposing the metal connector between the first metal bracket and the second metal bracket can prevent relative displacement between the first metal bracket and the second metal bracket due to impetus of the injected molten non-metal during injection molding.

In step S1303, after the non-metal bracket is cooled and formed, the first metal bracket and the second metal bracket can be stably connected to the non-metal bracket. The metal connector 153 may be removed through breaking or cutting along the groove 1541 and the groove 1542 in FIG. 14, to obtain the button bracket shown in FIG. 11.

An embodiment of this application further provides an electronic device. The electronic device may include the button assembly described in FIG. 3 to FIG. 12. The electronic device may be a mobile phone, a tablet computer, a smartwatch, a television, a smart display, a camera, or the like that includes the button assembly. A type of the electronic device is not limited in this application.

It should be noted that "same" in terms of mechanical part dimensions in embodiments of this application does not mean absolutely same. A person skilled in the art may understand that because a person skilled in the art may properly adjust a dimension of a mechanical part based on a design requirement, a deviation within a specific range is allowed for "same" dimensions of two mechanical parts. For example, the difference ranges from 0.1 mm to 0.5 mm. Similarly, parallel, perpendicular, or the like for angles may also be approximately parallel or perpendicular.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A button assembly, comprising:
a first button and a second button, wherein the first button and the second button are arranged in a first direction;
a first antenna and a second antenna, wherein there is a slot between the first antenna and the second antenna in the first direction, and the slot is located between the first button and the second button; and
a first metal bracket and a second metal bracket, wherein the first metal bracket is disposed on a side that is of the first antenna and that is away from the first button, a projection of the first metal bracket in a second direction is located in a region in which the first antenna is located, the second metal bracket is disposed on a side that is of the second antenna and that is away from the second button, a projection of the second metal bracket in the second direction is located in a region in which the second antenna is located, and the second direction is perpendicular to a main plane of the first button.

2. The button assembly according to claim 1, wherein a distance between the first metal bracket and the second metal bracket in the first direction is greater than a distance between the first antenna and the second antenna in the first direction.

3. The button assembly according to claim 1 or 2, wherein the first button comprises a first button body and a first mounting ear, the first mounting ear is disposed at an end of the first button body, and the first mounting ear and the first button body are respectively disposed on two sides of the first antenna in the second direction; and
the first antenna comprises a first through hole, the projection of the first metal bracket in the second direction at least partially overlaps a projection of the first through hole in the second direction, at least a part of the first metal bracket is disposed between the first antenna and the first mounting ear in the second direction, and a projection of the first mounting ear in the second direction at least partially overlaps the projection of the first metal bracket in the second direction.

4. The button assembly according to claim 3, wherein the second button comprises a second button body and a second mounting ear, the second mounting ear is disposed at an end of the second button body, and the second mounting ear and the second button body are respectively disposed on two sides of the second antenna in the second direction; and
the second antenna comprises a second through hole, the projection of the second metal bracket in the second direction at least partially overlaps a projection of the second through hole in the second direction, at least a part of the second metal bracket is disposed between the second antenna and the second mounting ear in the second direction, and a projection of the second mounting ear in the second direction at least partially overlaps the projection of the second metal bracket in the second direction.

5. The button assembly according to claim 3 or 4, wherein the button assembly further comprises a non-metal bracket, the non-metal bracket is disposed on a side that is of the first antenna and that is away from the first button body, and the first metal bracket and the second metal bracket are connected to the non-metal bracket.

6. The button assembly according to claim 5, wherein the first metal bracket comprises a first planar part and a first bent part, an included angle is formed between the first planar part and the first bent part, and the first metal bracket is connected to the non-metal bracket through the first bent part.

7. The button assembly according to claim 6, wherein a dimension of the first metal bracket in the second direction is 3 to 5 times a dimension of the first planar part in the second direction.

8. The button assembly according to any one of claims 5 to 7, wherein the second metal bracket comprises a second planar part and a second bent part, an included angle is formed between the second planar part and the second bent part, and the second metal bracket is connected to the non-metal bracket through the second bent part.

9. The button assembly according to claim 8, wherein a dimension of the second metal bracket in the second direction is 3 to 5 times a dimension of the second planar part in the second direction.

10. The button assembly according to any one of claims 5 to 9, wherein a side that is of the non-metal bracket and that is away from the metal bracket comprises a groove, the button assembly further comprises a circuit board, and the circuit board is disposed in the groove.

11. The button assembly according to any one of claims 1 to 10, wherein a distance between the first metal bracket and an end that is of the first antenna and that is close to the second antenna in the first direction is greater than or equal to 0.2 mm.

12. The button assembly according to any one of claims 1 to 11, wherein a distance between the second metal bracket and an end that is of the second antenna and that is close to the first antenna in the first direction is greater than or equal to 0.2 mm.

13. A method for manufacturing a button bracket, comprising:
manufacturing a metal bracket, wherein the metal bracket comprises a first metal bracket, a second metal bracket, and a metal connector, and at least a part of the metal connector is disposed between the first metal bracket and the second metal bracket;
manufacturing a non-metal bracket through an injection molding process, wherein the first metal bracket and the second metal bracket are connected to the non-metal bracket; and
removing the metal connector.

14. An electronic device, comprising the button assembly according to any one of claims 1 to 12, wherein the first button and the second button are disposed on a same side of the electronic device.

15. The electronic device according to claim 14, wherein the electronic device comprises a middle frame, and the first antenna and the second antenna are disposed in accommodating space enclosed by the middle frame, or the first antenna and the second antenna are at least parts of the middle frame.
